## Europäisches Patentamt

## European Patent Office

## Office européen des brevets

(19)

(11) Numéro de publication: **0 003 448**
**B1**

(12) # FASCICULE DE BREVET EUROPEEN

(45) Date de publication du fascicule de brevet:
18.03.81

(51) Int. Cl.³: **H 04 Q 11/04**

(21) Numéro de dépôt: 79400015.8

(22) Date de dépôt: 08.01.79

(54) **Réseau de connexion spatio-temporel.**

(30) Priorité: **20.01.78 FR 7801634**

(43) Date de publication de la demande:
08.08.79 Bulletin 79/16

(45) Mention de la délivrance du brevet:
18.03.81 Bulletin 81/11

(84) Etats contractants désignés:
**BE DE GB IT NL SE**

(56) Documents cités:
**DE-A-2 446 391**
**FR-A-2 071 411**
**FR-A-2 315 815**
**FR-A-2 347 846**
**FR-A-2 370 393**
**GB-A-1 458 526**
**GB-A-1 489 743**
**US-A-3 867 579**
**US-A-3 912 873**
**US-A-3 959 596**
**ELECTRICAL COMMUNICATION, vol. 46, n° 4, 1971 New York ROSE: »Pulse Code Modulation Tandem Exchange Field Trial Model«**
pages 246 à 252
**IBM TECHNICAL DISCLOSURE BULLETIN vol. 18, n° 8, janvier 1976, New York**
**BENICHOU »Path test system for digital switching network«**
pages 2541 et 2542
**INTERNATIONAL SWITCHING SYMPOSIUM octobre 1976, Kyoto**

(73) Titulaire: **THOMSON-CSF, 173, Boulevard Haussmann, F-75360 Paris Cedex 08 (FR)**

(72) Inventeur: **Charransol, Pierre, Le Mat. Tel. Serv. Brev. 46 Quai Alphonse Le Gallo, F-92103 Boulogne-Billancourt Cedex (FR)**
Inventeur: **Athenes, Claude, Le Mat. Tel. Serv. Brev. 46 Quai Alphonse Le Gallo, F-92103 Boulogne-Billancourt Cedex (FR)**
Inventeur: **Sallé, Jacques, Le Mat. Tel. Serv. Brev. 46 Quai Alphonse Le Gallo, F-92103 Boulogne-Billancourt Cedex (FR)**

(74) Mandataire: **Chaverneff, Vladimir et al, "THOMSON-CSF" - SCPI 173 Boulevard Haussmann, F-75360 Paris Cedex 08 (FR)**

**Roche »TIME Division Switching Networks«**
pages 421-1-1 à 7
**INTERNATIONAL ZURICH SEMINAR ON DIGITAL COMMUNICATIONS, mars 1978 Zürich**
**CHARRANSOL et al.: »Development of a Time Division Switching Network Usable in a very large Range of Capacities«**
pages B6.1 à B6.6

## Réseau de connexion spatio-temporel

La présente invention se rapporte aux réseaux de connexion spatio-temporels qui permettent, dans les centraux téléphoniques utilisant la technique de la Modulation par Impulsion et Codage (MIC), de procéder à la mise en relation entre un abonné demandeur et un abonné demandé.

On rappelle que la technique MIC consiste à échantillonner les signaux vocaux au rythme de 8 kHz et à coder ces échantillons sur 8 eb (abréviation d'Elément Binaire équivalente au »Bit« anglo-saxon). On rassemble ensuite les échantillons ainsi codés dans des trames de 32 intervalles de temps (IT) qui correspondent à des jonctions MIC à 32 voies. Les chiffres ainsi cités le sont à titre d'exemple, mais sont le plus souvent utilisés en raison des normalisations nationales ou internationales qui sont imposées pour des raisons évidentes de compatibilité. Il en sera de même dans la suite de ce texte. Il est connu pour réaliser les réseaux de connexion des centraux téléphoniques d'utiliser des assemblages plus ou moins complexes de circuits appelés commutateurs temporels et commutateurs spatiaux.

On sait par exemple réaliser des réseaux de connexion du type TST dans lesquels un étage spatial (S) est compris entre deux étages temporels (T), l'ensemble permettant de réaliser les connexions désirées.

Il est connu de diviser de tels réseaux en deux plans de commutation identiques superposés, et de multipler les jonctions entrantes et sortantes respectivement sur les entrées et sorties des deux plans de commutation, de telle sorte que si une panne intervient dans un plan, l'autre plan le remplace. Un tel réseau est décrit dans le brevet allemand n° 2 446 391 (SIEMENS).

Il est également connu d'utiliser dans des réseaux de type TST, comportant des commutateurs de données numériques TST qui comprennent plusieurs groupes de commutation interconnectés dont un groupe actif et au moins deux groupes de réserve, les jonctions entrantes et sortantes du commutateur étant multiplées sur les entrées et sorties de chacun des groupes, de telle sorte que si le groupe actif tombe en panne, le trafic est commuté sur un groupe de réserve. Un tel réseau est décrit dans le brevet français n° 2 315 815 (ERICSSON).

On peut également citer un réseau de type TST, décrit dans le brevet américain n° 3 912 873, qui comporte deux sous-réseaux. Chacun des sous-réseaux comporte son propre réseau de commutation de type TST et des multiplexeurs — démultiplexeurs qui comportent chacun autant d'entrées-sorties que le sous-réseau, les jonctions entrantes et sortantes du sous-réseau étant multiplées sur tous les multiplexeursdémultiplexeurs qu'il comporte.

Pour que de tels réseaux soient sans blocage, il faut que le nombre de mailles de sortie soit égal au double (à une près en toute rigueur) du nombre de mailles d'accès, ceci aussi bien dans les étages spatiaux que dans les étages temporels (où les mailles sont représentées par les intervalles de temps). Cette exigence conduit, à vitesse constante, à doubler le matériel des étages temporels, et par voie de conséquence à quadrupler celui des étages spatiaux. Cici est très onéreux.

L'objet de l'invention est une nouvelle structure de réseau temporel et spatial sans étage purement spatial et sans étage purement temporel, qui permet d'obtenir un taux de blocage négligeable à l'échelle humaine, pour une augmentation minime du matériel untilisé.

On connaît aussi des réseaux à trois étages de commutateurs temporels, les commutateurs d'entrée et de sortie (premier et troisième étage) étant identiques et les commutateurs intermédiaires (deuxième étage) ayant la même structure de base que les autres commutateurs, mais comportant des éléments complémentaires. Un tel réseau est décrit dans le brevet français n° 2 071 411 (CIT).

Le réseau de connexion selon l'invention comporte un certain nombre de circuits de commutation élémentaires, chaque circuit effectuant une commutation à la fois spatiale et temporelle, à l'exclusion de tout commutateur purement temporel et de tout commutateur purement spatial. Le circuit de commutation élémentaire utilisé pour la réalisation d'un tel réseau de connexion est la matrice temporelle symétrique (MTS) décrite dans la demande de brevet français n° 2 341 999. Le circuit MTS permet de commuter chacun des IT de huit jonctions MIC entrantes MIC1 à MIC8 sur n'importe lequel des IT de huit jonctions sortantes S1 à S8, réalisant ainsi 256 chemins spatio-temporels.

Les circuits de commutation élémentaire étant tous identiques, l'invention entraîne une grande simplification de la maintenance et de l'extension.

Selon une caractéristique de l'invention, le réseau de connexion spatio-temporel comprend un étage terminal modulaire et un étage central, m jonctions entrantes et m jonctions sortantes sont reliées à chacun des modules de l'étage terminal, et chaque module comprend p (p étant supérieur ou égal à deux) commutateurs spatio-temporels (MTS1 à MTSp) comportant hit entrées et huit sorties, et p blocs (CDN1 à CDNp) de deux concentrateurs-déconcentrateurs numériques (CD1, CD2) les m jonctions entrantes et sortantes du module étant multiplées respectivement sur m entrées et m sorties de chacun des concentrateurs-déconcentrateurs qui permettent respectivement leur concentration et leur déconcentration sur une jonction bidirectionnelle (J1 pour CD1, J2 pour CD2); chaque commutateur spatio-temporel (MTSi avec i variant de 1 à p) ayant une entrée et une sortie reliée à chacun des deux concentrateurs-déconcentrateurs (CD1i et CD2i) du bloc lui correspondant (CDNi) par l'intermédiaire de deux jonctions bidirectionnelles (Ji, J2), chaque commutateur spatio-temporel ayant, en outre, une entrée reliée à un générateur de tonalités et de messages vocaux et ayant cinq entrées et cinq sorties qui peuvent être connectées à l'étage central du réseau de connexion.

D'autres particularités et avantages de l'invention apparaîtront clairement dans la description suivante de différentes réalisations particulières d'un réseau de connexion utilisant exclusivement, comme circuit de commutation élémentaire, des matrices MTS. Cette description est bien entendu présentée à titre d'exemple non limitatif et ne restreint en aucune maière la portée de l'invention; elle est faite en regard des figures annexées qui montrent:

— les figures 1a et 1b, les connexions d'un circuit MTS inclus dans l'étage temporel d'entrée et de sortie, respectivement, d'un réseau de connexion de type TST connu;
— la figure 2, les connexions d'un circuit MTS inclus dans un étage terminal d'un réseau de connexion selon l'invention;
— la figure 3, une unité terminale de raccordement d'abonnés, de joncteurs et d'auxiliaires, comportant une partie de l'étage terminal d'un réseau de connexion selon l'invention;
— les figures 4 à 7, différentes réalisations particulières d'un réseau de connexion selon l'invention;
— les figures 8a à 8d, différentes réalisations particulières du plan de connexion, selon la figure 7.

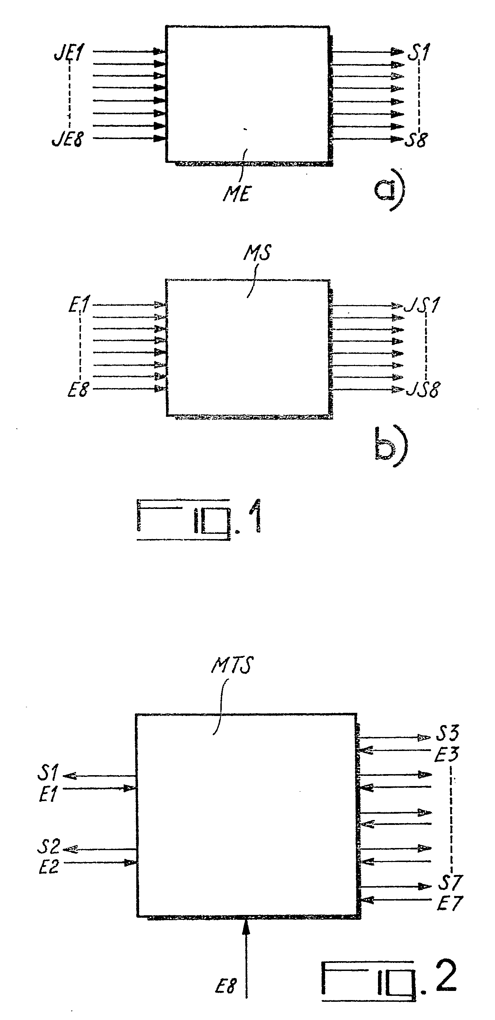

Sur la figure 1a, un circuit MTS est utilisé, dans l'étage d'entrée d'un réseau de connexion de type TST connu, comme commutateur temporel ME. Des échantillons de parole sont reçus sur les 8 jonctions MIC entrantes JE1 à JE8. Après avoir été commutés temporellement par ME, ces échantillons de parole sont émis sur les 8 sorties S1 à S8 vers l'étage central de commutation du réseau de connexion.

Sur la figure 1b, un circuit MTS est utilisé, dans l'étage de sortie d'un réseau de connexion de type TST connu, comme commutateur temporel MS. Des échantillons de parole provenant de l'étage central de commutation du réseau de connexion sont reçus sur les 8 entrées E1 à E8. Après avoir été commutés temporellement par MS, ces échantillons de parole sont émis sur les 8 jonctions sortantes JS1 à JS8.

En variante, il est connu de raccorder seulement 7 jonctions entrantes au commutateur ME et 7 jonctions sortantes au commutateur MS, la huitième entrée de ME et la huitième sortie de MS étant utilisées pour effectuer des tests.

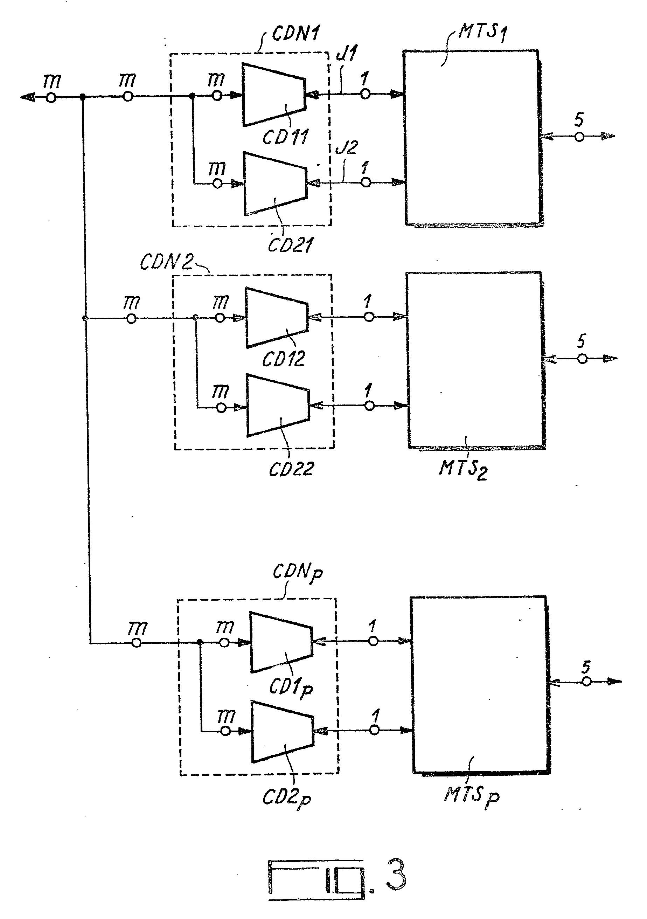

En référence à la figure 2, une matrice MTS fait partie de l'étage que nous appellerons terminal d'un réseau de connexion selon l'invention. Elle a deux de ses entrées, E1 et E2, raccordées chacune à une jonction MIC entrante, deux de ses sorties, S1 et S2, raccordées chacune à une jonction MIC sortante, cinq de ses entrées, E3 à E7, et cinq de ses sorties, S3 à S7 pouvant être raccordées aux autres parties du réseau de connexion.

Un circuit MTS inclus dans l'étage terminal dur réseau de connexion selon l'invention peut donc être relié par deux jonctions bidirectionnelles aux abonnés, joncteurs et auxiliaires, par l'intermédiaire de concentrateurs-déconcentrateurs dont il sera question ci-dessous, et par cinq liaisons bidirectionnelles au reste du réseau de connexion. Ce circuit MTS permet d'effectuer une commutation temporelle, dans les deux sens de transmission, des intervalles de temps IT provenant de, ou allant vers les abonnés, les joncteurs et les auxiliaires, et allant vers, ou provenant des autres parties du réseau de connexion.

Les abonnés, les joncteurs et les auxiliaires étant raccordés de façon identique au réseau de connexion, et pour alléger la description, le terme »abonnés« sera seul utilisé dans la suite du texte. Mais, chaque fois qu'il apparait, il faut sous-entendre »joncteurs et auxiliaires«.

La huitième entrée E8 du circuit MTS est connectée à un générateur de tonalités et de messages vocaux aussi appelés films parlants. Dans un exemple de réalisation de l'invention, ce génératur est dupliqué pour des raisons de sécurité. L'entrée E8 permet ainsi d'introduire des tonalités et des films parlants dans le circuit de l'invention.

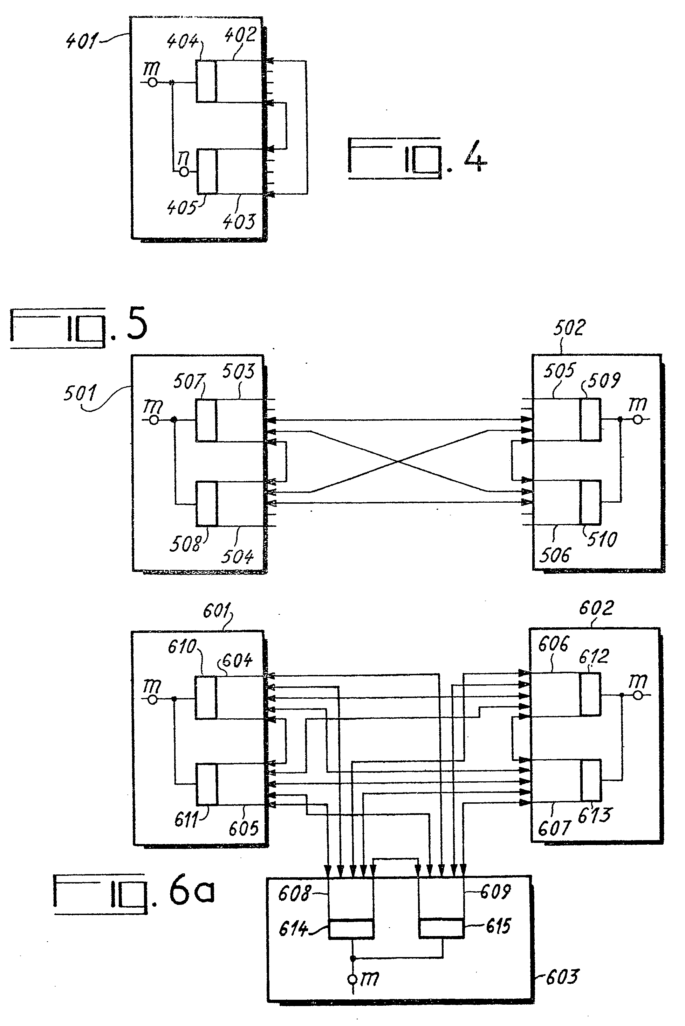

Une unité terminale de raccordement d'abonnés selon la figure 3 comporte p blocs CDN1 à CDNp et p matrices temporelles symétriques MTS1 à MTSp. Une unité terminale de raccordement d'abonnés est reliée aux abonnés par m jonctions MIC bidirectionnelles et par l'intermédiaire d'organes annexes tels que des organes d'échantillonnage, de codage-décodage, de concentration-déconcentration, non décrits car ils ne font pas partie intégrante de l'invention. Suivant une convention usuelle, toutes les connexions sont représentées sur cette figure par un trait unique supportant un rond accompagné d'un chiffre qui indique le nombre réel de liaisons. Les m jonctions MIC de liaison avec les abonnés sont multiplées sur les p blocs CDN1 à CDNp. Chaque bloc tel que CDN1 assure la concentration et la déconcentration numérique des m jonctions MIC de liaison avec les abonnés sur deux jonctions bidirectionnelles telles que J1 et J2. Chaque bloc tel que CDN1 est connecté en cascade à une matrice temporelle symétrique telle que MTS1 par l'intermédiaire des deux jonctions bidirectionnelles telles que J1 et J2. Chaque circuit MTS comporte 5 entrées et 5 sorties permettant de le relier aux autres parties du réseau de connexion par 1 à 5 jonctions MIC bidirectionnelles.

Chaque bloc tel que CDN1 comprend deux concentrateurs-déconcentrateurs numériques tels que CD11 à CD21, les m jonctions MIC de liaison avec les abonnés, raccordées au bloc CDN1, étant multiplées sur les deux concentrateurs-déconcentrateur CD11 et CD21 permet de concentrer et de déconcentrer m jonctions MIC bidirectionnelles sur 1 jonction MIC bidirectionnelle, J1 et J2 respectivement, par l'intermédiaire de laquelle il est relié au circuit MTS1.

Les concentrateurs-déconcentrateurs tels que CD11 ne seront pas décrits davantage, car ils peuvent être de n'importe quel type connu, et en tout état de cause, la façon dont ils sont réalisés ne fait pas partie intégrante de l'invention. Le nombre p de circuits MTS est égal au nombre p de blocs CDN. Le nombre p de blocs CDN inclus dans une même unité terminale de raccordement d'abonnés dépend du trafic à acheminer sur les m liaisons MIC bidirectionnelles. Pour des raisons de sécurité, p sera toujours au moins égal à 2. La suite de la description sera faite, à titre d'exemple, en supposant $p = 2$.

La figure 4 montre un exemple particulier de réalisation d'un réseau de connexion selon l'invention, dans le cas d'un autocommutateur de capacité suffisamment faible pour que tous les abonnés puissent être raccordés à la même unité terminale de raccordement d'abonnés 401. L'unité 401 comporte deux matrices temporelles symétriques 402 et 403 et les blocs 404 et 405, analogues aux blocs CDN de la figure 3, et associés aux circuits 402 et 403 respectivement.

L'ensemble du réseau de connexion étant constitué par les deux circuits 402 et 403, toutes les communications entre les abonnés peuvent être établies en connectant directement au moins une entrée et une sortie du circuit 402 à au moins une sortie et une entrée du circuit 403.

L'étude du trafic acheminé dans une telle configuration montre que, en reliant les circuits 402 et 403 par une seule jonction bidirectionnelle, le taux de blocage est de l'ordre de $10^{-3}$, c'est-à-dire beaucoup plus important. Par contre, il suffit de relier ces deux circuits par 2 jonctions bidirectionnelles seulement, comme représenté sur la figure 4, pour obtenir un taux de blocage nul.

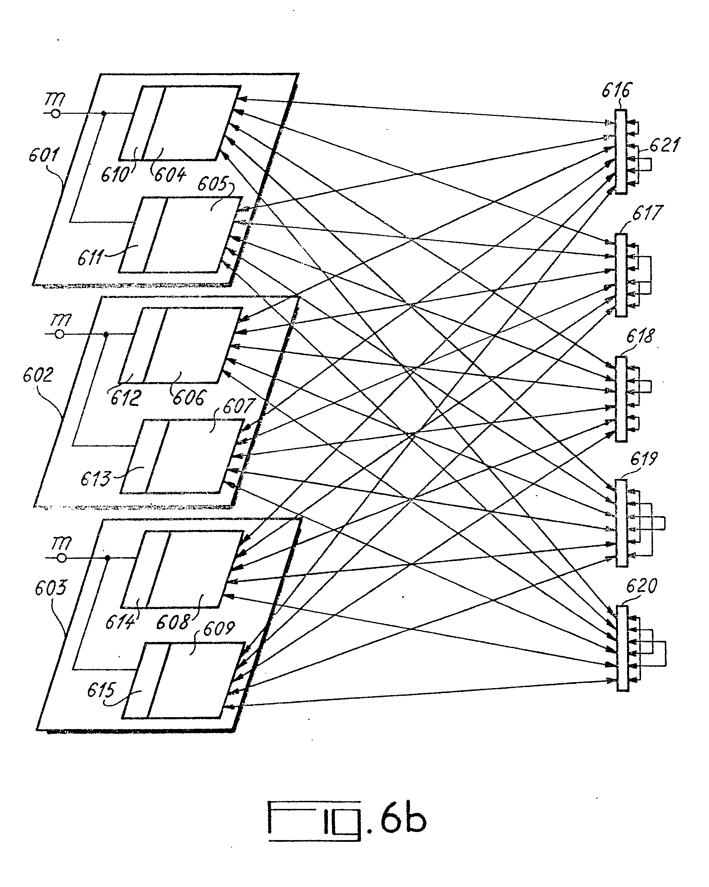

La figure 5 montre un exemple de réalisation d'un réseau de connexion selon l'invention, dans le cas d'un autocommutateur de capacité telle que l'ensemble des abonnés est raccordé à deux unités terminales de raccordement d'abonnés 501 et 502. Chaque unité 501 et 502 comporte deux matrices temporelles symétriques, 503 et 504, et 505 et 506, respectivement, ainsi que les blocs 507, 508, 509 et 510, analogues aux blocs CDN de la figure 3, et associés aux circuits 503, 504, 505 et 506, respectivement.

Chacun des circuits 503 à 506 peut être connecté à 5 jonctions bidirectionnelles permettant de relier ce circuit aux autres parties du réseau de connexion. L'ensemble du réseau de connexion étant constitué par les quatre circuits 503 à 506, toutes les communications entre les abonnés peuvent être établies en connectart directement au moins une entrée et une sortie de chacun des quatre circuits 503 à 506 à au moins une sortie et une entrée de chacun des trois autres circuits. L'étude du trafic acheminé dans une telle configuration montre que l'on obtient un taux de blocage acceptable inférieur à $10^{-10}$, en reliant simplement les quatre circuits deux à deux par une seule jonction bidirectionnelle, comme représenté sur la figure 5.

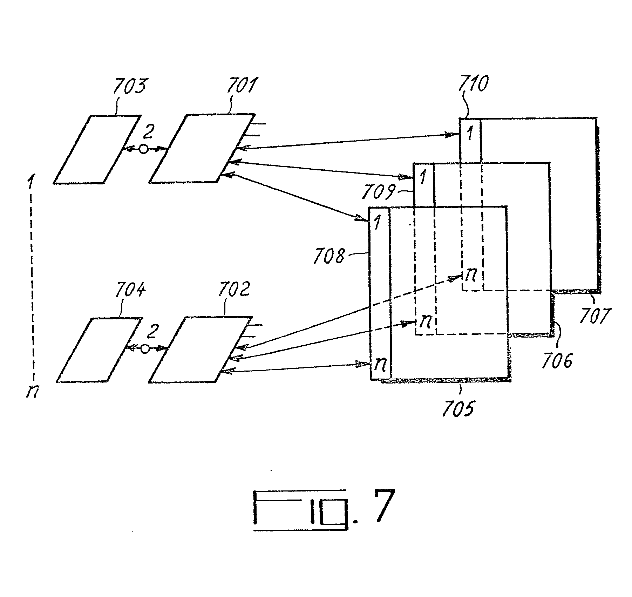

La figure 6a montre un exemple particulier de réalisation d'un réseau de connexion selon l'invention, dans le cas d'un autocommutateur de capacité telle que l'ensemble des abonnés est raccordé à trois unités terminales de raccordement d'abonnés 601, 602 et 603. Chaque unité 601, 602 et 603 comporte deux matrices temporelles symétriques 604 et 605, 606 et 607, et 608 et 609, respectivement, ainsi que les blocs 610 à 615, analogues aux blocs CDN de la figure 3, et associés aux circuits 604 à 609, respectivement.

Chacun des circuits 604 à 609 peut être connecté à 5 jonctions bidirectionnelles permettant de relier ce circuit aux autres parties du réseau de connexion. L'ensemble du réseau de connexion étant constitué par les six circuits 604 à 609, toutes les communications entre les abonnés peuvent être établies en connectant directement une entrée et une sortie de chacun des six circuits 604 à 609 à une sortie et une entrée de chacun des cinq autres circuits.

L'étude du trafic acheminé dans une telle configuration montre que, en reliant ainsi six circuits deux à deux par une jonction bidirectionnelle, on obtient un taux de blocage acceptable, inférieur à $10^{-15}$.

La figure 6b est une autre représentation d'un réseau de connexion selon la figure 6a, absolument équivalente dans sa structure et dans les possibilités de fonctionnement du réseau. La différence avec le réseau précédent réside uniquement dans le fait que chaque sortie et chaque entrée d'un des circuits 604 à 609 n'est plus reliée à une entrée et une sortie de chacun des autres circuits directement, mais par l'intermédiaire de connecteurs 616, 617, 618, 619 et 620.

Chacun des circuits MTS 604 à 609 a accés par une jonction bidirectionnelle à chacun des connecteurs 616 à 620. Les points de connexion de ces connecteurs sont court-circuités deux à deux par des liaisons telles que par exemple la liaison 621, ces liaisons étant disposées de façon à permettre d'établir un chemin bidirectionnel entre tous les circuits 604 à 609 pris deux à deux.

L'intérêt de la représentation selon la figure 6b apparaitra mieus à la lumiére de la description de la figure 7.

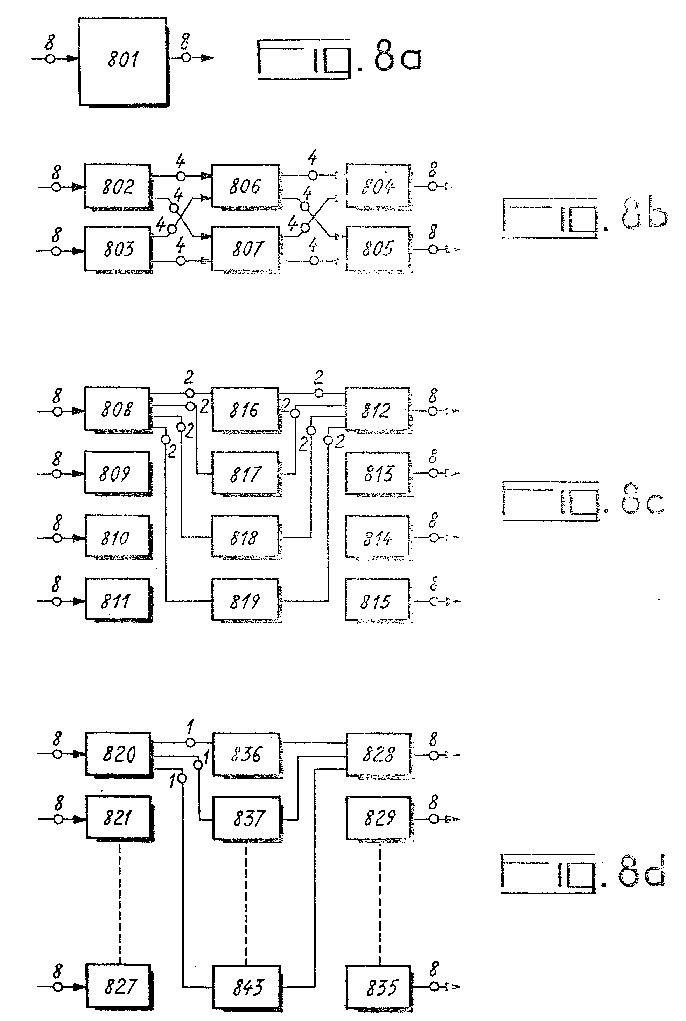

La figure 7 montre un exemple particulier de réalisation d'un réseau de connexion conforme à l'invention, dans le cas d'un autocommutateur de capacité telle que 3 unités terminales de raccordement d'abonnés ne sont plus suffisantes pour raccorder l'ensemble des abonnés. Dans ce cas, l'étage terminal du réseau de connexion comprend donc plus de 6 matrices temporelles symétriques. Or chaque circuit MTS ne peut être raccordé aux autres parties du réseau de connexion que par cinq jonctions bidirectionnelles seulement. Il est donc impossible de relier entre eux directement, deux à deux, plus de six circuits MTS. Sur la figure 7, n matrices temporelles symétriques telles que 701 et 702, avec leurs blocs associés tels que 703 et 704, analogues aux blocs CDN de la figure 3, sont nécessaires pour raccorder l'ensemble de tous les abonnés. Les circuits MTS sont reliés par des jonctions bidirectionnelles non plus directement, mais par l'intermédiaire de plans de connexion 705, 706 et 707 qui seront décrits plus en détail en référence aux figures 8a à 8d.

L'étude du trafic montre que deux plans de connexion seulement sont nécessaires pour écouler le trafic. Pour des raisons de sécurité, le nombre de plans de connexion a été fixé à 3 dans l'exemple décrit. Le taux de blocage est alors de l'ordre de $10^{-25}$, et de l'ordre de $10^{-6}$ lorsque l'un des trois plans de connexion est en panne et que le trafic doit être acheminé par deux plans seulement.

Chaque circuit MTS tel que 701, 702 a accés par une jonction bidirectionnelle à chacun des trois plans de connexion 705, 706 et 707 par l'intermédiaire des connecteurs 708, 709 et 710. Chaque circuit MTS est donc connecté à 3 jonctions bidirectionnelles, et chaque plan de connexion est connecté à n jonctions bidirectionnelles.

La comparaison des figures 4 à 7 montre que, lorsque le nombre des abonnés devant être raccordés à l'autocommutateur augmente, il est aisé d'effectuer des extensions de matériel sans modifier profondément la structure du réseau de connexion.

En effet, pour raccorder des abonnés supplémentaires, lorsque le nombre d'abonnés supplémentaires oblige à passer soit de la structure du réseau de connexion selon la figure 4 à la structure selon la figure 5, soit de la structure selon la figure 5 à la structure selon la figure 6a, il suffit d'ajouter le nombre nécessaire d'unités terminales de raccordement d'abonnés et également de raccorder par de nouvelles jonctions bidirectionnelles les nouveaux circuits MTS à ceux qui existaient précédemment.

Lorsque le nombre d'abonnés supplémentaires oblige à passer de la structure de réseau de connexion selon la figure 6b à la structure selon la figure 7, l'extension de matériel peut également être réalisée de façon très simple. Dans un exemple préféré de réalisation de l'invention, les courts-circuits tels que 621 sur la figure 6b sont réalisés par un câblage monté sur une carte de circuit imprimé enfichable. Les plans de connexion sont également équipés chacun sur une carte de circuit imprimé enfichable. Pour effectuer le passage d'une structure à l'autre, il suffit de déficher des connecteurs les cinq circuits imprimés portant des courts-circuits et d'enficher trois circuits imprimés portant des plans de connexion sur trois des connecteurs. Bien entendu, il faut de plus augmenter le nombre d'unités terminales de raccordement et installer des jonctions bidirectionnelles pour relier les nouveaux circuits MTS et les trois connecteurs utilisés.

Il serait possible également de réaliser les réseaux des figures 4 et 5 de façon analoque à celle représentée sur la figure 6b, les extensions s'effectuant alors de la façon décrite ci-dessus, en effectuant des changements de cartes de circuits imprimés.

Les figures 8a à 8d montrent différentes réalisations particulières de chacun des plans de connexion 705, 706, 707. Chacun de ces plans de connexion est composé d'un assemblage de matrices temporelles symétriques.

La figure 8a montre la réalisation d'un plan dans le cas d'un autocommutateur de capacité telle que quatre unités terminales de raccordement d'abonnés, comportant au total huit circuits MTS, sont nécessaires pour raccorder l'ensemble de tous les abonnés. Chacun des trois plans de connexion 705, 706 et 707 est relié auxdits circuits MTS par huit jonctions bidirectionnelles, et comporte donc huit entrées et huit sorties. Un circuit MTS étant un commutateur spatio-temporel à huit entrées et huit sorties, il suffit d'un seul circuit MTS 801 pour réaliser ce plan, comme le montre la figure 8a.

La figure 8b montre la réalisation d'un plan dans le cas d'un autocommutateur de capacité telle que seize circuits MTS sont nécessaires pour raccorder l'ensemble de tous les abonnés dans les unités terminales de raccordement d'abonnés. Chacun des trois plans de connexion 705, 706 et 707 est relié à ces circuits MTS par seize jonctions bidirectionnelles, et comporte donc seize entrées et seize sorties.

Ce plan comporte alors un étage d'entrée composé de deux circuits MTS 802 et 803, un étage de sortie composé de deux circuits MTS 806 et 807.

Les deux circuits MTS de l'étage d'entrée et les deux circuits MTS de l'étage de sortie permettent de réaliser respectivement les seize entrées et les seize sorties du plan de connexion.

Les deux circuits MTS 806 et 807 permettent de réaliser quasi sans blocage la commutation de tout intervalle de temps apparaissant sur une entrée de 802 ou 803, sur toute sortie de 804 ou 805.

A cet effet, les huit sorties de chacun des circuits MTS 802 et 803 sont réparties par moitié sur les entrées de chacun des circuits MTS 806 et 807, et les huit sorties de chacun des circuits MTS 806 et 807 sont réparties par moitié sur les entrées de chacun des circuits MTS 804 et 805.

La figure 8c montre la réalisation d'un plan de connexion dans le cas d'un autocommutateur de capacité telle que 32 circuits MTS sont nécessaires pour raccorder l'ensemble de tous les abonnés, dans les unités terminales de raccordement d'abonnés. Chacun des trois plans de connexion 705, 706 et 707 est relié à ces circuits MTS par 32 jonctions bidirectionnelles et comporte donc 32 entrées et 32 sorties.

Ce plan comporte alors un étage d'entrée composé de quatre circuits MTS 808, 809, 810 et 811, un étage de sortie composé de quatre circuits MTS 812, 813, 814 et 815, et un étage intermédiaire composé de quatre circuits MTS 816, 817, 818 et 819.

Les quatre circuits MTS de L'étage d'entrée et les quatre circuits MTS de l'étage de sortie permettent de réaliser respectivement les 32 entrées et les 32 sorties du plan de connexion. Les quatre circuits MTS de l'étage intermédiaire permettent de réaliser quasi sans blocage la commutation de tout intervalle de temps apparaissant sur une jonction entrante de l'étage d'entrée, sur toute jonction sortante de l'étage de sortie. .

A cet effet, les huit sorties de chacun des circuits MTS de l'étage d'entrée sont réparties de façon régulière sur les entrées des circuits MTS de l'étage intermédiaire, deux jonctions sortantes de chacun des circuits MTS 808 à 811 étant reliées à deux jonctions entrantes de l'un des circuits MTS 816 à 819. De même, les huit sorties de chacun des circuits MTS de l'étage intermédiaire sont réparties de façon régulière sur les entrées des circuits MTS de l'étage de sortie, deux jonctions sortantes de chacun des circuits MTS 816 à 812 étant reliées à deux jonctions entrantes de l'un des circuits MTS 812 à 815.

La figure 8d montre la réalisation d'un plan de connexion dans le cas d'un autocommutateur de capacité telle que 64 circuits MTS sont nécessaires pour raccorder l'ensemble des abonnés, dans les unités terminales de raccordement d'abonnés. Chacun des trois plans de connexion 705, 706 et 707 est relié à ces circuits MTS par 64 jonctions bidirectionnelles, et comporte donc 64 entrées et 64 sorties.

Ce plan comprend alors un étage d'entrée composé de huit circuits MTS 820 à 827, un étage de sortie composé de huit circuits MTS 828 à 835, et un étage intermédiaire composé de huit circuits MTS 836 à 843.

Les huit circuits MTS de l'étage d'entrée et les huit circuits MTS de l'étage de sortie permettent de réaliser respectivement les 64 entrées et les 64 sorties du plan. Les huit circuits MTS de l'étage intermédiaire permettent de réaliser quasi sans blocage la commutation de tout intervalle de temps apparaissant sur une jonction entrante de l'étage d'entrée, sur toute jonction sortante de l'étage de sortie.

A cet effet, les huit sorties de chacun des circuits MTS de l'étage d'entrée sont réparties de façon régulière sur les entrées des circuits MTS de l'étage intermédiaire, la jonction sortante n°i du circuit MTS n°j de l'étage d'entrée étant reliée à la jonction entrante n°j du circuit MTS n°i de l'étage intermédiaire, les nombres i et j prenant successivement toutes les valeurs de 0 à 7. De même, les huit sorties de chacun des circuits MTS de l'étage intermédiaire sont réparties régulièrement sur les entrées des circuits MTS de l'étage de sortie, la jonction sortante n°r du circuit MTS n°q de l'étage intermédiaire étant reliée à la jonction entrante n°q du circuit MTS n°r de l'étage de sortie, les nombres r et q prenant successivement toutes les valeurs de 0 à 7.

Dans le cas d'un autocommutateur de capacité telle que le nombre de circuits MTS inclus dans les unités terminales de raccordement d'abonnés est différent de 8, 16, 32 ou 64, la configuration de plan utilisée est celle correspondant à celui des nombres précités immédiatement supérieur au nombre de circuits MTS, les entrées et sorties du plan n'étant alors pas toutes équipées.

Un test du réseau de connexion a lieu après chaque établissement d'une connexion. Le test a lieu de la façon décrite ci-dessous en référence à la figure 3. Chaque concentrateur-déconcentrateur tel que par exemple CD11 comporte un concentrateur dont une entrée est réservée au test et un déconcentrateur dont une sortie est de même réservée au test. Après établissement d'une connexion, une séquence de test est envoyée sur l'entrée réservée au test du concentrateur utilisé pour la connexion. Cette séquence de test traverse, dans le réseau de connexion, les mêmes organes que ceux mis en oeuvre pour la connexion à tester. On vérifie alors que la séquence de test est bien reçue sur la sortie réservée du déconcentrateur utilisé pour la connexion.

A chaque organe du réseau de connexion est associé un compteur. En cas de faute sur un organe, le compteur associé à cet organe est incrémenté. Lorsque la valeur inscrite dans les compteurs, correspondant au nombre de fautes détectées, atteint un certain seuil, un programme d'analyse du contenu de ces compteurs est déclenché pour permettre de localiser l'organe défectueux.

**Revendications**

1. Réseau de connexion spatio-temporel destiné à commuter sur des jonctions sortantes des signaux composés de huit éléments binaires arrivant sur des jonctions entrantes, du type comprenant un étage terminal modulaire et un étage central permettant de relier entre eux les différents modules de l'étage terminal, les jonctions entrantes et sortantes de l'étage terminal étant respectivement les jonctions entrantes et sortantes du réseau de connexion, et m jonctions entrantes et m jonctions sortantes étant reliées à chacun des modules de l'étage terminal, caractérisé en ce que chaque module de l'étage terminal comprend p commutateurs spatio-temporels (MTS1 à MTSp) comportant huit entrées et huit sorties, et p blocs (CDN1 à CDNp) de deux concentrateurs-déconcentrateurs numériques (CD1, CD2), p étant supérieur ou égal à deux, les m jonctions entrantes et sortantes du module étant multiplées respectivement sur m entrées et m sorties de chacun des concentrateurs-déconcentrateurs qui permettent respectivement leur concentration et leur déconcentration sur une jonction bidirectionnelle (J1 pour CD1, J2 pour CD2); chaque commutateur spatio-temporel (MTSi avec i variant de 1 à p) ayant une entrée et une sortie reliée à chacun des deux concentrateurs-déconcentrateurs (CD1i et CD2i) du bloc lui correspondant (CDNi) par l'intermédiaire de deux jonctions bidirectionnelles (J1, J2), chaque commutateur spatio-temporel ayant, en outre, une entrée reliée à un générateur de tonalités et de messages vocaux et ayant cinq entrées et cinq sorties qui peuvent être connectées à l'étage central du réseau de connexion.

2. Réseau de connexion selon la revendication 1, caractérisé en ce que l'étage terminal comprend au plus six commutateurs spatio-temporels comportant huit entrées et huit sorties, et que l'étage central est composé de jonctions destinées à relier entre eux deux à deux par des liaisons tous ces commutateurs, chaque liaison étant composée d'au moins deux jonctions ayant des sens de transmission différents.

3. Réseau de connexion selon la revendication 1, caractérisé en ce que l'étage terminal comprend au plus six commutateurs spatio-temporels (604 à 609) comportant huit entrées et huit sorties, et que l'étage central est composé de jonctions destinées à relier au moins une entrée et une sortie de chaque commutateur à un connecteur (616 à 620) comportant plusieurs points de connexion, ces points de connexion étant court-circuités deux à deux de façon que tous les commutateurs soient reliés entre eux deux à deux par des liaisons, chaque liaison comportant au moins, pour chaque sens de transmission, une première jonction, un premier point de connexion d'un connecteur, un court-circuit, un second point de connexion du connecteur, et une seconde jonction.

4. Réseau de connexion selon la revendication 1, caractérisé en ce que l'étage terminal comprend au moins sept commutateurs spatio-temporels (tels que 701, 702) comportant huit entrées et huit sorties, et que l'étage central est composé de un à cinq plans de connexion (705, 706, 707) comprenant chacun au moins un commutateur spatio-temporel identique à ceux de l'étage terminal, chaque plan de connexion comportant n entrées et n sorties et étant relié, par l'intermédiaire d'un connecteur (708, 709, 710) à chaque commutateur de l'étage terminal, par au moins deux jonctions ayant des sens de transmission différents.

5. Réseau de connexion selon la revendication 4, caractérisé en ce que n est supérieur à huit et au plus égal à seize, et que chaque plan de connexion est composé de trois étages montés en cascade, chaque étage comprenant deux commutateurs spatio-temporels (802 à 807) à huit entrées et huit sorties, les entrées des commutateurs du premier étage (802, 803) et les sorties des commutateurs du troisième étage (804, 805) constituant respectivement les entrées et les sorties du plan de connexion, chaque commutateur du premier étage ayant quatre sorties connectées à quatre entrées de l'un des commutateurs du deuxième étage (806, 807) et quatre sorties connectées à quatre entrées de l'autre commutateur du deuxième étage, chaque commutateur du deuxième étage ayant quatre sorties connectées à quatre entrées de l'un des commutateurs du troisième étage et quatre sorties connectées à quatre entrées de l'autre commutateur du troisième étage.

6. Réseau de connexion selon la revendication 4, caractérisé en ce que n est supérieur à seize et au plus égal à trente-deux, et que chaque plan de connexion est composé de trois étages montés en cascade, chaque étage comprenant quatre commutateurs spatio-temporels (808 à 819) à huit entrées et huit sorties, les entrées des commutateurs du premier étage (808, 809, 810, 811) et les sorties des commutateurs du troisième étage (812, 813, 814, 815) constituant respectivement les entrées et les sorties du plan de connexion, chaque commutateur du premier étage ayant ses sorties groupées par deux, chaque groupe de deux sorties étant connecté deux entrées d'un commutateur différent du deuxième étage (816, 817, 818, 819) et chaque commutateur du deuxième étage ayant ses sorties groupées par deux, chaque groupe de deux sorties étant connecté à deux entrées d'un commutateur différent du troisième étage.

7. Réseau de connexion selon la revendication 4, caractérisé en ce que n est supérieur à seize et au plus égal à soixante-quatre, et que chaque plan de connexion est composé de trois étages montés en cascade, chaque étage comprenant huit commutateurs spatio-temporels (820 à 835) à huit entrées et huit sorties, les entrées des commutateurs du premier étage (820 à 827) et les sorties des commutateurs du troisième étage (828 à 835) constituant respectivement les entrées et les sorties du plan de connexion, chaque commutateur du premier étage ayant ses sorties connectées chacune à une entrée d'un commutateur différent du deuxième étage (836 à 843), et chaque commutateur du deuxième étage ayant ses sorties connectées chacune à une entrée d'un commutateur différent du troisième étage.

8. Réseau de connexion selon l'une quelconque des revendications 4 à 7, caractérisé en ce que son étage central est composé de trois plans de connexion.

9. Réseau de connexion selon l'une quelconque des revendications 1 à 8, caractérisé en ce que une entrée et une sortie de chaque concentrateur-déconcentrateur numérique de l'étage terminal sont réservées au test.

**Patentansprüche**

1. Raum-Zeit-Schaltnetz zum Anlegen von aus acht Binärgrößen bestehenden, an Eingangsverbindungsleitungen erscheinenden Signalen an Ausgangsverbindungs-Leitungen, mit einer Modul-Endstufe und einer Zwischenstufe, vermittels welcher die verschiedenen Bauteile der Endstufe miteinander verbindbar sind, wobei die Eingangs- bzw. Ausgangsverbindungsleitungen der Endstufe die Eingangs- bzw. Ausgangsverbindungsleitungen des Schaltnetzes bilden und mit jedem der Endstufenbauteile m Eingangsverbindungsleitungen und m Ausgangsverbindungsleitungen verbunden sind, dadurch gekennzeichnet, daß jede Endstufe p Raum-Zeit-Schalter (MTS1 bis MTSp) mit acht Eingängen und acht Ausgängen, sowie p Blöcke (CDN1 bis CDNp) mit je zwei numerischen Gruppier- und Entgruppiervorrichtungen (CD1, CD2) aufweist, wobei p gleich oder größer als zwei ist, und wobei die m Eingang- und Ausgangsverbindungsleitungen des Bauteils an je m Eingängen bzw. m Ausgängen jeder Gruppier- und Entgruppiervorrichtung mit dem Faktor acht multipliziert sind, derart, daß die Gruppier- und Entgruppiervorrichtungen deren Gruppierung bzw. Entgruppierung an einer doppeltgerichteten Verbindungsleitung (J1 für CD1, J2 für CD2) bewirken können, während jeder Raum-Zeit-Schalter (MTSi, wo i gleich 1 bis p ist) einen Eingang, sowie einen Ausgang aufweist, der über zwei doppeltgerichtete Verbindungsleitungen (J1, J2) an jede der beiden Gruppier- und Entgruppiervorrichtungen (CD1i und CD2i) des ihm entsprechenden Blocks (CDNi) angeschlossen ist und jeder Raum-Zeit-Schalter ferner einen an einen Ton- und Lautmeldungsgeber angeschlossenen Eingang, sowie fünf Eingänge und fünf Ausgänge aufweist, die an die Zwischenstufe des Schaltnetzes anschließbar sind.

2. Schaltnetz nach Anspruch 1, dadurch gekennzeichnet, daß die Endstufe höchstens sechs, acht Eingänge und acht Ausgänge besitzende Raum-Zeit-Schalter aufweist, und daß die Zwischenstufe aus Verbindungsleitungen besteht, vermittels welcher alle Schalter paarweise über Verbindungslinien miteinander verbindbar sind, wobei jede dieser Verbindungslinien aus wenigstens zwei Verbindungsleitungen mit entgegengesetzten Leitrichtungen besteht.

3. Schaltnetz nach Anspruch 1, dadurch gekennzeichnet, daß die Endstufe höchstens sechs Raum-Zeit-Schalter (604 bis 609) mit acht Eingängen aufweist, und daß die Zwischenstufe aus Verbindungsleitungen besteht, vermittels welcher wenigstens ein Eingang und ein Ausgang jedes Schalters an ein mehrere Verbindungsstellen besitzendes Verbindungsstück (616 bis 620) anschließbar ist, wobei diese Verbindungsstellen paarweise derart kurzgeschlossen sind, daß alle Schalter paarweise über Verbindungslinien miteinander verbunden sind, deren jede pro Leitrichtung eine erste Verbindungsleitung, eine erste Verbindungsstelle eines Verbindungsstücks, eine Kurzschlußbrücke, eine zweite Verbindungsstelle des Verbindungsstücks und eine zweite Verbindungsleitung aufweist.

4. Schaltnetz nach Anspruch 1, dadurch gekennzeichnet, daß die Endstufe wenigstens sieben Raum-Zeit-Schalter (wie 701, 702) mit acht Eingängen und acht Ausgängen aufweist, und daß die Zwischenstufe aus einem bis fünf Verbindungsfeldern (705, 706, 707) mit je wenigstens einem den Raum-Zeit-Schaltern der Endstufe entsprechenden Raum-Zeit-Schalter besteht, wobei jedes Verbindungsfeld n Eingänge und n Ausgänge besitzt, die über ein Verbindungsstück (708, 709, 710) vermittels wenigstens zweier Verbindungsleitungen mit entgegengesetzten Leitrichtungen an jeden Schalter der Endstufe angeschlossen sind.

5. Schaltnetz nach Anspruch 4, dadurch gekennzeichnet, daß n größer als acht und höchstens gleich sechzehn ist, und daß jedes Verbindungsfeld aus drei kaskadenartig angeordneten Stufen besteht, deren jede zwei Raum-Zeit-Schalter (802 bis 807) mit acht Eingängen und acht Ausgängen besitzt, wobei die Eingänge der Schalter der ersten Stufe (802, 803) und die Ausgänge der Schalter der dritten Stufe (804, 805) die Eingänge des Verbindungsfeldes bilden und jeder Schalter der ersten Stufe vier an vier Eingänge eines der Schalter der zweiten Stufe (806, 807) angeschlossene Ausgänge, sowie vier an vier Eingänge des anderen Schalters der zweiten Stufe angeschlossene Ausgänge besitzt, während jeder Schalter der zweiten Stufe vier an vier Eingänge eines der Schalter der dritten Stufe angeschlossene Ausgänge, sowie vier an vier Eingänge des anderen Schalters der dritten Stufe angeschlossene Ausgänge aufweist.

6. Schaltnetz nach Anspruch 4, dadurch gekennzeichnet, daß n größer als sechzehn und höchstens gleich zweiunddreißig ist, und daß jedes Verbindungsfeld aus drei kaskadenartig angeordneten Stufen besteht, deren jede vier Raum-Zeit-Schalter (808 bis 819) mit acht Eingängen und acht Ausgängen aufweist, wobei die Eingänge der Schalter der ersten Stufe (808, 809, 810, 811) und die Ausgänge der Schalter der dritten Stufe (812, 813, 814, 815) die Eingänge bzw. Ausgänge des Verbindungsfeldes bilden und die Ausgänge jedes Schalters der ersten Stufe paarweise gruppiert sind, derart, daß jede dieser je zwei Ausgänge umfassenden Gruppen mit zwei Eingängen eines anderen Schalters der zweiten Stufe (816, 817, 818, 819) verbunden ist, während die Ausgänge jedes Schalters der zweiten Stufe paarweise gruppiert sind und jede der je zwei Ausgänge umfassenden Gruppen an zwei Eingänge eines anderen Schalters der dritten Stufe angeschlossen ist.

7. Schaltnetz nach Anspruch 4, dadurch gekennzeichnet, daß n größer als sechzehn und höchstens gleich vierundsechzig ist, und daß jedes Verbindungsfeld aus drei kaskadenartig angeordneten Stufen besteht, deren jede acht Raum-Zeit-Schalter (820 bis 835) mit acht Eingängen und acht Ausgängen aufweist, wobei die Eingänge der Schalter der ersten Stufe (820 bis 827) und die Ausgänge der Schalter der dritten Stufe (828 bis 835) die Eingänge bzw. Ausgänge des Verbindungsfeldes bilden und jeder der Ausgänge jedes Schalters der ersten Stufe mit einem Eingang eines anderen Schalters der zweiten Stufe (836 bis 843) verbunden ist, während jeder der Ausgänge jedes Schalters der zweiten Stufe mit einem Eingang eines anderen Schalters der dritten Stufe verbunden ist.

8. Schaltnetz nach einem der Ansprüche 4 bis 7, dadurch gekennzeichnet, daß seine Zwischenstufe aus drei Verbindungsfeldern besteht.

9. Schaltnetz nach einem der Ansprüche 1 bis 8, dadurch gekennzeichnet, daß ein Eingang und ein Ausgang jeder numerischen Gruppier- und Entgruppiervorrichtung der Endstufe lediglich zum Testen dienen.

## Claims

1. Space-time connecting network adapted to commutate on output connecting lines signals composed of eight binary bits which arrive on input connecting lines, comprising a modular terminal stage and a central stage adapted to connect to each other the various modules of the terminal stage, the input connecting lines and output connecting lines of the terminal stage constituting, respectively, the input lines and output lines of said connecting network, m input connecting lines and m output connecting lines being connected to each one of the modules of the terminal stage, characterized in that each module of the terminal stage comprises p space-time commutators (MTS1 to MTSp) having eight input terminals and eight output terminals, and p blocks (CDN1 to CDNp) including each two digital concentrator-deconcentrators (CD1, CD2) p being greater than or equal to two, said m input and output connecting lines of the module being multiplied respectively on m imput terminals and m output terminals of each one of the concentrator-deconcentrators which are adapted to effect their concentration and deconcentration, respectively, on a bidirectional connecting line (J1 for CD1, J2 for CD2) each space-time commutator (MTSi, i being equal to 1 to p) having one inlet terminal and one outlet terminal connected to each one of said two concentrator-deconcentrators (CD1i and CD2i) of the corresponding block (CDNi) through two bidirectional connecting lines (J1, J2), each space-time commutator further having one input terminal connected to an acoustic signal and vocal message generator, as well as five input terminals and five output terminals adapted to be connected to the central stage of the connecting network.

2. Connecting network according to claim 1, characterized in that the terminal stage comprises at most six space-time commutators having eight input terminals and eight output terminals, and in that the central stage is constituted by connecting lines adapted to interconnect by pairs, by means of connecting means, all these commutators, each connecting means being constituted by at least two connecting lines having different transmission directions.

3. Connecting network according to claim 1, characterized in that the terminal stage comprises at most six space-time commutators (604 to 609) having eight input terminals and eight output terminals, and in that the central stage is constituted by connecting lines adapted to connect at least one input terminal and one output terminal of each commutator to a connector (616 to 620) comprising a plurality of connecting points, said connecting points being short-circuited by pairs in such a manner that all the commutators are interconnected by pairs by connecting means, each connecting means comprising at least, by direction of transmission, a first connecting line, a first connecting point of a connector, a short-circuiting bridge, a second connecting point of said connector, and a second connecting line.

4. Connecting network according to claim 1, characterized in that the terminal stage comprises at least seven space-time commutators (such as 701, 702) having eight input terminals, and eight output terminals, and in that the central stage ist constituted by one to five connexion planes (705, 706, 707) including each at least one space-time commutator identical with those of the terminal stage, each connecting plane comprising n input terminals and n output terminals and being connected through a connector (708, 709, 710) to each commutator of the terminal stage through at least two connecting lines having different transmission directions.

5. Connecting network according to claim 4, characterized in that n is greater than eight and at most equal to sixteen, and in that each connecting plane is constituted by three stages arranged in a cascade-like manner, each stage comprising two space-time commutators (802 to 807) having eight input terminals and eight output terminals, the input terminals of the commutators of the first stage (802, 803) and the output terminals of the commutators of the third stage (804, 805) constituting respectively the input terminals and the output terminals of the connecting plane, each commutator of the first stage having four output terminals connected to four input terminals of the commutators of the second stage (806, 807) and four output terminals connected to four input terminals of the other commutator of the second stage, each commutator of the second stage having four output terminals connected to four input terminals of one of the third stage and four output terminals connected to four input terminals of other commutator of third stage.

6. Connecting network according to claim 4, characterized in that n is greater than sixteen and at most equal to thirty-two and that each connecting plane is constituted by three stages arranged in a cascade-like manner, each stage comprising four space-time commutators (808 to 819) having eight input terminals and eight output terminals the input terminals of the commutators of the first stage (809, 810, 811) and the output terminals of the commutators of the third stage (812, 813, 814, 815) constituting respectively the input terminals and the output terminals of the connecting plane, each commutator of the first stage having its output terminals in pairs, each pair of the output terminals being connected to a pair of input terminals of the other commutator of the second stage (816, 817, 818, 819) and and each commutator of the second stage having its output terminals in pairs, each pair being connected to two input terminals of the commutator of the third stage.

7. Connecting network according to claim 4, characetrized in that n is greater than sixteen and at most equal to sixty-four, and in that each connecting plane is constituted by three stages arranged in a cascade-like manner, each stage comprising eight space-time commutators (820 to 835) having input and eight output terminals, the input terminals of the commutators of the first satge (802 to 827) and the output terminals of the commutators of the third stage (828 to 835) constituting respectively the input terminals and the output terminals of the connecting field, each commutator of the first stage having its output terminals connected each to an input terminal of a different commutator of the second stage (836 to 843) and each commutator of the second stage having its output terminals connected each to an input terminal of a different commutator of the third stage.

8. Connecting network according to any one of claims 4 to 7, characterized in that its central stage is constituted by three connecting planes.

9. Connecting network according to any one of claims 1 to 8, characterized in that one input terminal and one output terminal of each digital concentrator-deconcentrator are adapted for testing purposes only.

Fig. 1

Fig. 2

FIG. 3

FIG.4

FIG.5

FIG.6a

Fig.6b

Fig. 7

Fig. 8a

Fig. 8b

Fig. 8c

Fig. 8d